Europäisches Patentamt

European Patent Office

Office européen des brevets

(19)

(11) Veröffentlichungsnummer: **0 531 788 A1**

## (12) EUROPÄISCHE PATENTANMELDUNG

(21) Anmeldenummer: **92114429.1**

(22) Anmeldetag: **25.08.92**

(51) Int. Cl.5: **C08L 15/00**, C08L 23/08, //(C08L15/00,23:08),(C08L23/08, 15:00)

(30) Priorität: **06.09.91 DE 4129741**

(43) Veröffentlichungstag der Anmeldung: **17.03.93 Patentblatt 93/11**

(84) Benannte Vertragsstaaten:
**DE FR GB IT**

(71) Anmelder: **BAYER AG**

**W-5090 Leverkusen 1 Bayerwerk(DE)**

(72) Erfinder: **Ostrowicki, Andreas, Dr.**
**1520 Venetian Blvd.**
**Pt. Edward, Ontario NJT JZ8(CA)**
Erfinder: **Pask, Stephen David, Dr.**
**Goethestrasse 57 D**
**W-4047 Dormagen(DE)**

(54) **Vulkanisierbare Elastomermischungen.**

(57) Vulkanisierbare Elastomermischungen, enthaltend
A) 95 bis 5 Gew.-% Ethylen-Vinylacetat-Copolymerisat und
B) 5 bis 95 Gew.-% teilweise oder vollständig vernetzten, weitgehend gesättigten Nitrilkautschuk, der in Form von dispergierten Teilchen mit einem mittleren Teilchendurchmesser von weniger als 25 μm in der Mischung vorliegt,
können verwendet werden zur Herstellung von Vulkanisaten, die sich durch hohe Festigkeit und hohe Chemikalienbeständigkeit auszeichnen.

EP 0 531 788 A1

EP 0 531 788 A1

Die Erfindung betrifft vulkanisierbare Elastomermischungen aus Ethylen-Vinylacetat-Copolymerisaten (EVA) und teilweise oder vollständig vernetzten, weitgehend gesättigten Nitrilkautschuken (Butadien-Acrylnitril-Copolymerisaten) (H-NBR) sowie die daraus durch radikalische Vernetzung hergestellten Covulkanisate.

EVA ist ein Kautschuk, der witterungsfest, beständig gegen Chemikalien, Dampf und heißes Wasser ist und eine geringe Quellung in Kohlenwasserstoffen zeigt.

Weitgehend gesättigte Nitrilkautschuke werden beispielsweise durch Hydrierung der entsprechenden Nitrilkautschuke (Butadien-Acrylnitril-Copolymerisate) erhalten. Die daraus erhaltenen Vulkanisate zeichnen sich durch hohe Festigkeit und hohe Chemikalienbeständigkeit aus (vgl. J. Thörmer et. al. Kautschuk + Gummi Kunstst. 36 (1983), Nr. 4, 269 - 274).

Vulkanisate aus EVA und H-NBR, die durch Vermischen der beiden Polymerbestandteile, verschiedener Füll- und Hilfsstoffe, Vulkanisations- und Coagenzien, gefolgt von einer thermisch oder durch energiereiche Strahlung initiierten Vulkanisation hergestellt wurden und die sich z.B. zur Herstellung von Kabelmänteln oder Transportbändern eignen, beschreiben EP 0 151 691 und EP 319 199.

Wie aus EP 0 151 691 zu ersehen ist, liegen die Eigenschaften der herkömmlichen Mischungen zwischen denen der H-NBR- und denen der EVA-Vulkanisate. Beispielsweise bedeutet dies, daß mit zunehmendem Anteil von EVA in den Mischungen die Festigkeiten gegenüber einem reinen H-NBR-Vulkanisat deutlich abfallen.

Es wurde nun überraschenderweise gefunden, daß makroskopisch homogene Mischungen aus EVA und teilweise oder vollständig vernetztem H-NBR hergestellt werden können, daß diese Mischungen ein gegenüber herkömmlichen EVA/H-NBR-Mischungen wesentlich verbessertes Verarbeitungsverhalten zeigen und daß diese Mischungen radikalisch zu Vulkanisaten mit hervorragenden Eigenschaften vulkanisiert werden können.

Gegenstand der Erfindung sind daher vulkanisierbare Elastomermischungen enthaltend

A) 95 bis 5 Gew.-%, vorzugsweise 80 bis 20 Gew.-%, besonders bevorzugt 60 bis 40 Gew.-% Ethylen-Vinylacetat-Copolymerisate (EVA) und

B) 5 bis 95 Gew.-%, vorzugsweise 20 bis 80 Gew.-%, besonders bevorzugt 40 bis 60 Gew.-% teilweise oder vollständig vernetzten, weitgehend gesättigten Nitrilkautschuk (Butadien-Acrylnitril-Copolymerisat) (H-NBR), der in Form von dispergierten Teilchen mit einem mittleren Teilchendurchmesser von weniger als 25 $\mu$m, vorzugsweise weniger als 10 $\mu$m, besonders bevorzugt weniger als 1 $\mu$m in der Mischung vorliegt.

Die erfindungsgemäßen, vulkanisierbaren Elastomermischungen können in vorteilhafter Weise durch inniges Mischen der beiden Elastomer-Komponenten in den angegebenen Gewichtsverhältnissen hergestellt werden, wobei man das Mischen in Gegenwart eines Vulkanisationsmittels oder Vulkanisationssystems durchführt, welches geeignet ist, unter den herrschenden Mischungsbedingungen eine teilweise oder vollständige Vernetzung des eingesetzten, weitgehend gesättigten Nitrilkautschuks zu bewirken.

Das Mischen der beiden Komponenten wird üblicherweise bei Temperaturen von 140 bis 220°C, bevorzugterweise bei Temperaturen von 160 bis 210°C, beispielsweise in Innenmischern, Zweiwellenschnecken-Knetaggregaten oder auch in einem Einwellen-Kokneter bei Scherraten von 10 bis 10 000 $s^{-1}$, bevorzugt 1000 bis 7500 $s^{-1}$, besonders bevorzugt bei Scherraten von 2000 bis 6000 $s^{-1}$ durchgeführt.

Bei dem beschriebenen Mischvorgang unter Einwirkung entsprechender Scherenergie wird eine Dispersion des teilweise oder vollständig vernetzten H-NBR's in dem noch nicht vernetzten EVA-Kautschuk erreicht. Der Vernetzungsgrad des H-NBR's nach dieser dynamischen Vernetzung kann bei ungefüllten Kautschukmischungen durch Auflösen des H-NBR's in z.B. Methylethylketon ermittelt werden (Fehlergrenze ± 5 %). Hierbei werden einige Gramm Mischung gewogen (± 1 mg) und in ca. 100 ml Methylethylketon 8 Stunden lang unter Rückfluß gekocht. Diese Lösung wird dann ultrazentrifugiert, um das unlösliche Polymer abzutrennen. Nach Abgießen der überstehenden Lösung kann das Gewicht des unlöslichen (vernetzten) Polymers ermittelt werden. Die erfindungsgemäßen Mischungen enthalten 40 bis 100 Gew.-%, vorzugsweise 60 bis 100 Gew.-%, besonders bevorzugt 80 bis 100 Gew.-%, vernetztes H-NBR, bezogen auf den Gesamtgehalt an H-NBR in der erfindungsgemäßen Mischung.

Die Eigenschaften der erfindungsgemäßen Elastomermischungen können durch Zusätze, wie Füllstoffe, Alterungsschutz- und/oder Verarbeitungshilfsmitteln und/oder Weichmachern modifiziert werden, indem man diese Zusätze vor, während oder nach dem Mischen den Elastomer-Komponenten zugibt.

Die auf diese Weise erhaltenen erfindungsgemäßen Elastomermischungen lassen sich auf den in der Kautschuktechnologie üblicherweise eingesetzten Misch- und Verarbeitungsaggregaten, wie z.B. Walzen, Innenmischern oder Schneckenaggregaten weiterverarbeiten und weisen im Vergleich mit den herkömmlichen EVA/H-NBR Mischungen ein verbessertes Verarbeitungsverhalten aufgrund einer deutlich verringerten Klebeneigung auf.

Die Weiterverarbeitung der erfindungsgemäßen Elastomer-Mischungen geschieht dabei in Gegenwart von radikalspendenden Vulkanisationschemikalien und Coagentien, wie Peroxiden und TAC (Triallylcyanurat) oder TAiC (Triallylisocyanurat), so daß eine Vernetzung der beiden Elastomerkomponenten stattfindet. Die Vernetzung der beiden Elastomerkomponenten kann auch durch Einwirkung energiereicher Strahlung erfolgen.

Die bevorzugten Ethylen/Vinylacetat-Copolymeren mit einem Gehalt von 20 bis 80 Gew.-% Vinylacetat-Einheiten sind im wesentlichen lineare Polymere ohne oder mit geringen kristallinen Bereichen. Sie weisen Mooney-Viskositäten (ML-4 (100°C) nach DIN 53 523) zwischen 15 und 60 ME auf. Besonders gut geeignet sind Polymere mit Mooney-Viskositäten (ML-4 (100°C) zwischen 20 und 30 ME. Ethylen/Vinylacetat-Copolymere können durch radikalinitiierte Polymerisation von Ethylen und Vinylacetat bei Hochdruck oder in Lösung bei Mitteldruck hergestellt werden.

EVA-Kautschuk ist beispielsweise in den deutschen Offenlegungsschriften 1 495 767 und 2 437 490 beschrieben.

Obwohl einfache Copolymerisate aus Ethylen und Vinylacetat besonders bevorzugte Einsatzmaterialien darstellen, können auch Terpolymerisate mit bis zu 15 Gew.-%, bezogen auf EVA, copolymerisierter Termonomereinheiten, wie z.B. Kohlenmonoxid, Methacrylsäureanhydrid, Acrylsäure-, insbesondere $C_1$-$C_4$-Acrylsäureester, Methacrylsäure-, insbesondere $C_1$-$C_4$-Methacrylsäureester oder Maleinsäureeinheiten, oder Glycidylmethacrylat, vorteilhaft im Sinne der Erfindung eingesetzt werden.

Bei der Herstellung der weitgehend ungesättigten, nitrilgruppenhaltigen Elastomeren geht man vorzugsweise von Nitrilkautschuken aus, die aus 10 bis 50 Gew.-% Methacrylnitril oder Acrylnitril, 50 bis 90 Gew.-% eines konjugierten Diens mit 4 bis 9 C-Atomen und 0 bis 30 Gew.-% eines dritten Monomers, z.B. Methacrylsäure, Alkylester der Methacrylsäure oder Vinylacetat bestehen, die beispielsweise gemäß DE-OS 2 539 132 hydriert werden.

Vorzugsweise enthalten die Nitrilkautschuke 48 bis 15 Gew.-% Acrylnitril und 52 bis 85 Gew.-% Butadien oder Isopren.

Der nach der Hydrierung verbleibende Gehalt an Doppelbindungen des zur Herstellung der erfindungsgemäßen Mischungen eingesetzten H-NBR beträgt 0,4 bis 20 Doppelbindungen auf 1000 C-Atome der Polymerhauptkette, bevorzugt 0,5 bis 16 Doppelbindungen auf 1000 C-Atome der Polymerhauptkette, besonders bevorzugt 1 bis 8 Doppelbindungen auf 1000 C-Atome der Polymerhauptkette.

H-NBR ist beispielsweise aus den deutschen Offenlegungsschriften 2 539 132 und 2 913 992 und der US-PS 3 700 637 bekannt.

Für die dynamische Vernetzung des H-NBR unter Einwirkung von Scherenergie geeignete Vulkanisationsmittel oder Vulkanisationssysteme sind beispielsweise die üblicherweise eingesetzten Kombinationen aus Schwefel und einen oder mehreren geeigneten Schwefelspendern und/oder Beschleuniger, Retardern und Aktivatoren, wie z.B. in DE-OS 3 232 692 beschrieben.

Ausführliche Beschreibungen von Schwefelvulkanisiersystemen finden sich bei W. Hofmann, "Vulkanisation und Vulkanisationshilfsmittel", Verlag Berliner Union GmbH, Stuttgart 1965 und bei Alliger und Sjothun, "Vulcanization of Elastomers", Reinhold Pub. Corp. New York 1964. Geeignete Schwefelspender umfassen Thiurampolysulfide wie z.B. Dipentamethylenthiuram-tetra- und hexasulfid, Tetramethylthiuram-disulfid; Amindisulfide wie z.B. Dimorpholyldisulfid; Natriumpolysulfide und Thioplaste.

Bevorzugte Vulkanisationsbeschleuniger umfassen Thiazolbeschleuniger wie
2-Mercaptobenzothiazol
Dibenzothiazyl-disulfid
Benzothiazyl-2-cyclohexylsulfenamid (CB)
Benzothiazyl-2-tert.-butylsulfenamid (TBBS)
N-Morpholinothio-2-benzothiazol (MBS)
Benzothiazyl-2-diisopropylsulfenamid (DIBS)
Benzothiazyl-2-tert.-amylsulfenamid (AMZ)
Benzothiazyl-dicyclohexylsulfenamid (DCBS) und
Morpholino-thiocarbonyl-sulfenmorpholid (OTOS)
Weitere bevorzugte Vulkanisationsbeschleuniger umfassen Diphenylguanidin (DPG) und Di-o-tolylguanidin (DOTG); Thiurame, wie Thiurammono- und -disulfide; und Dithiocarbamate, sowie Thiophosphate und deren Derivate und Salze, wie z.B. ihre Zinksalze.

Die bedeutendsten Aktivatoren sind die Metalloxide, insbesondere Zinkoxid. In einzelnen Fällen wird auch Magnesiumoxid oder Calciumhydroxid verwendet.

Die Dosierung der Vulkanisationschemikalien erfolgt bezogen auf den Anteil des H-NBR in den erfindungsgemäßen Mischungen und den nach der Hydrierung verbleibenden Anteil an Doppelbindungen im H-NBR und kann leicht durch einige Vorversuche ermittelt werden.

Bezogen auf den H-NBR-Anteil werden 0,025 bis 1 Tl. Schwefel, 0,1 bis 4 Tl. Schwefelspender, 0,025 bis 1 Tl. Beschleuniger, bevorzugt 0,05 bis 0,5 Tl. Schwefel, 0,2 bis 1 Tl. Schwefelspender, 0,025 bis 0,5 Tl. Beschleuniger für ein H-NBR mit 1 bis 8 Doppelbindungen auf 1000 C-Atome eingesetzt.

Weitere Bestandteile der erfindungsgemäßen Mischungen entsprechen den üblichen Mischungsbestandteilen einer Kautschukmischung und sind dem Fachmann bekannt, es handelt sich beispielsweise um Füllstoffe wie z.B. Ruß, Aluminiumoxyhydrate oder Kieselgel, Weichmacher, Alterungsschutzmittel, Verarbeitungshilfsmittel und Vulkanisationschemikalien, sofern die Vulkanisation nicht durch Strahlenvernetzung bewirkt wird. Für die Vernetzung der erfindungsgemäßen Mischungen zu Formteilen sind radikalspendende Agenzien wie z.B. Peroxide und die üblichen mehrfunktionellen, vernetzend wirkenden Verbindungen (wie z.B. Triallylcyanurat, Triallylisocyanurat, Bismaleinimiden, Divinylbenzol, Acryl- oder Methacrylsäureester mehrwertiger Alkohole u.a.) geeignet. Geeignete Peroxide sind z.B. Dialkylperoxide, Diaryl-oder Diaralkylperoxide, Alkylarylperoxide, Ketalperoxide, Peroxiether, Peroxioster oder anorganische Peroxide, wie z.B. Zinkperoxide.

Bevorzugt werden Di-tert.-butylperoxid, Bis-(tert.-butyl-peroxiisopropyl)benzol, Dicumylperoxid, 2,5-Dimethyl-2,5-di(tert.-butylperoxi)hexan, 2,5-Dimethyl-2,5-di(tert.-butyl-peroxi)hexen-3, 2,5-Dimethyl-2,5-di-(tert.-butylperoxi)hexin-3, 1,1-Bis(tert.-butylperoxi)-3,3,5-trimethylcyclohexan, Benzoylperoxid, tert.-Butylcumylperoxid, tert.-Butyl-perbenzoat, n-Butyl-4,4-di(tert.-butylperoxi)valerat, Ethyl-3,3-di(tert.-butylperoxi)-butyrat oder Zinkperoxid verwendet.

Die Peroxidmengen betragen 1 bis 15 Gew.-%, bevorzugt 2 bis 8 Gew.-%, bezogen auf den Kautschukanteil in den erfindungsgemäßen Mischungen.

Die auf diese Weise erhaltenen, erfindungsgemäßen Covulkanisate zeigen hervorragende mechanische Eigenschaften, gute Ölbeständigkeit und gute Heißluftbeständigkeit auf. Mischungen mit z.B. Aluminiumoxihydrat weisen zusätzlich eine gute Flammenwidrigkeit auf.

Sie eignen sich besonders für Anwendungen mit speziellen Anforderungen wie hohe Festigkeit, gute Beständigkeit gegen aggressive Umwelteinflüsse, Öle und hohe Temperaturen, wie z.B. Schläuche für Hydraulikflüssigkeiten, Öle und Kraftstoffe, Dichtungen, Zahn- und Antriebsriemen, Transportbanddecken und Kabelmäntel.

Beispiele:

Einsatzstoffe:

Therban 1707:
Hydriertes Acrylnitril-Butadien-Copolymerisat mit einem Acrylnitrilgehalt von 34 Gew.-%, einem Hydrierungsgrad von 99,4 % und einer Mooney-Viskosität ML 100°C (1+4) von 70 ME
Therban 1707 S:
Hydriertes Acrylnitril-Butadien-Copolymerisat mit einem Acrylnitrilgehalt von 34 Gew.-%, einem Hydrierungsgrad von 95,5 % und einer Mooney-Viskosität ML 100°C (1+4) von 70 ME
Therban 2207:
Hydriertes Acrylnitril-Butadien-Copolymerisat mit einem Acrylnitrilgehalt von 43 Gew.-%, einem Hydrierungsgrad von 99,3 % und einer Mooney-Viskosität ML 100°C (1+4) von 70 ME
Levapren 450:
Ethylen-Vinylacetat-Copolymer aus 45 Gew.-% Vinylacetat und 55 Gew.-% Ethen mit einer Mooney-Viskosität ML 100°C (1+4) von 20
Levapren 700 HV:
Ethylen-Vinylacetat-Copolymer aus 70 Gew.-% Vinylacetat und 30 Gew.-% Ethen mit einer Mooney-Viskosität ML 100°C (1+4) von 26
KA 8507:
Ethylen-Vinylacetat-Copolymer aus 45 Gew.-% Vinylacetat und 55 Gew.-% Ethen mit einer Mooney-Viskosität ML 100°C (1+4) von 22
Vulkanox OCD:
octyliertes Diphenylamin
Vulkanox ZMB-2:
Zinkmethylmercaptobenzimidazol
Vulkacit Thiuram:
Tetramethylthiuramdisulfid
Vulkacit CZ/Mg:

## Mischungsherstellung:

Die folgenden Mischungen wurden in einem 1,3 l Laborkneter bei 170°C, einem Füllgrad von 100 % mit 50 Upm und 6 bar Stempeldruck hergestellt

| Teile | A | B | C | D | E | F | G | H | I | J | K | L |
|---|---|---|---|---|---|---|---|---|---|---|---|---|
| Therban 1707 | 100 | - | 50 | 50 | 45 | 65 | - | - | 50 | 50 | 50 | - |
| Therban 1707 S | - | 100 | - | - | - | - | 50 | - | - | - | - | - |
| Therban 2207 | - | - | - | - | - | - | - | 50 | - | - | - | - |
| Levapren 450 | - | - | 50 | - | - | - | - | - | - | - | - | - |
| Levapren 700 HV | - | - | - | 50 | 65 | 45 | 50 | 50 | - | 50 | 50 | 100 |
| KA 8507 | - | - | - | - | - | - | - | - | 50 | - | - | - |
| Ruß N 550 | 45 | 45 | 45 | 45 | 45 | 45 | 45 | 45 | 45 | 45 | 45 | 45 |
| Stearinsäure[a] | - | 1,0 | 0,18 | 0,18 | 0,16 | 0,23 | 0,18 | 0,18 | 0,18 | 0,18 | 0,5 | - |
| Zinkoxid-aktiv[a] | 2 | 3,0 | 0,53 | 0,53 | 0,47 | 0,68 | 0,53 | 0,53 | 0,53 | 0,53 | 1,50 | - |
| Vulkanox OCD | 1,0 | 1,0 | 1,0 | 1,0 | 1,0 | 1,0 | 1,0 | 1,0 | 1,0 | 1,0 | 1,0 | 1,0 |
| Vulkanox ZMB-2 | 0,4 | 0,4 | 0,4 | 0,4 | 0,4 | 0,4 | 0,4 | 0,4 | 0,4 | 0,4 | 0,4 | 0,4 |
| Schwefel[a] | - | 0,5 | 0,09 | 0,09 | 0,08 | 0,11 | 0,09 | 0,09 | 0,09 | 0,09 | 0,25 | - |
| Vulkacit Thiuram[a] | - | 2,0 | 0,35 | 0,35 | 0,32 | 0,46 | 0,35 | 0,35 | 0,35 | 0,35 | 1,0 | - |
| Vulkacit CZ/Mg[a] | - | 0,5 | 0,09 | 0,09 | 0,08 | 0,11 | 0,09 | 0,09 | 0,09 | 0,09 | 0,25 | - |

[a] Zugabe nach 5 min Mischungszeit der übrigen Mischungsbestandteile, die Vernetzung des H-NBR-Anteils erfolgt bei unveränderten Mischungsbedingungen in 15 min

In die Mischungen A - L wurden anschließend bei 80°C auf einer Laborwalze Vulkanisationschemikalien eingearbeitet.
Die Mischungen wurden 15 min bei 180°C vulkanisiert. Folgende Werte wurden gefunden:

| | A | B | C | D | E | F | G | H | I | J | K | L |
|---|---|---|---|---|---|---|---|---|---|---|---|---|
| Bis(tert.butyl-peroxyliisopropyl)-benzol (40 %ig) | 7 | - | 3,5 | 3,5 | 3,5 | 3,5 | 3,5 | 3,5 | 3,5 | 5,5 | 5,5 | 7 |
| Triallylcyanurat | 2,5 | - | 1,3 | 1,3 | 1,3 | 1,3 | 1,3 | 1,3 | 1,3 | 2 | 2 | 2,5 |
| Festigkeit (MPa) (DIN 53504) | 25,1 | 30,5 | 18 | 21,6 | 16,4 | 21,9 | 23,3 | 21,3 | 22,9 | 24,4 | 19,2 | 19,9 |
| Dehnung (%) (DIN 53504) | 265 | 545 | 410 | 365 | 515 | 435 | 295 | 345 | 375 | 260 | 370 | 150 |
| Spannung 100 % (MPa) (DIN 53504) | 5,8 | 3 | 3,2 | 3,4 | 2,4 | 2,6 | 4,8 | 4,7 | 4,2 | 5,9 | 3,8 | 12,4 |
| Härte (Shore A) (DIN 53505) | 69 | 68 | 64 | 64 | 59 | 64 | 66 | 68 | 69 | 68 | 64 | 76 |
| Weiterreißwiderstand (N/mm) (DIN 53515) | 10,7 | 26,1 | 16,2 | 13,2 | 14,2 | 14,7 | 10,5 | 13,1 | 13,8 | 10,5 | 13,1 | 9,1 |
| Druckverformungsrest (%) (DIN 53517) | 40,5 | 78,6 | 52 | 47,4 | 63,8 | 49,6 | 42,8 | 54,1 | 52,4 | 38,2 | 64,4 | 17,7 |
| Quellung in ASTM-1 Öl (3 Tage, 150°C) Gewicht (%) | -0,7 | -1,4 | 13,5 | 1,1 | 1,2 | 1,3 | 0,9 | -0,1 | 11,7 | 1,2 | 0,6 | 2 |
| Quellung in ASTM-3 Öl (3 Tage, 150°C) Gewicht (%) | 19,9 | 19 | 78,1 | 28,6 | 31,5 | 27,7 | 26,3 | 20,8 | 68,1 | 28,2 | 29,5 | 31,1 |
| Quellung in ASTM-Kraftstoff 3 (3 Tage, 150°C), Gewicht (%) | 50,1 | 51,3 | 121,5 | 83,6 | 106,6 | 82,2 | 77,7 | 70 | 107,1 | 71,8 | 82,9 | 75,9 |
| Heißluftalterung (DIN53500) 14 Tage, 150°C Restfestigkeit (%) | 92 | 79 | 100 | 93 | 93 | 88 | 86 | 90 | 89 | 87 | 89 | 96 |
| Restdehnung (%) | 57 | 26 | 84 | 84 | 92 | 84 | 68 | 81 | 89 | 102 | 77 | 107 |

**Patentansprüche**

1. Vulkanisierbare Elastomermischungen enthaltend
   A) 95 bis 5 Gew.-% Ethylen-Vinylacetat-Copolymerisat (EVA) und

B) 5 bis 95 Gew.-% teilweise oder vollständig vernetzten, weitgehend gesättigten Nitrilkautschuk (Butadien-Acrylnitril-Copolymerisat), der in Form von dispergierten Teilchen mit einem mittleren Teilchendurchmesser von weniger als 25 $\mu$m in der Mischung vorliegt.

2. Verwendung der vulkanisierbaren Elastomermischungen nach Anspruch 1 zur Herstellung von Vulkanisaten.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| D,A | EP-A-0 151 691 (BAYER AG)<br>* Anspruch 1 *<br>--- | 1 | C08L15/00<br>C08L23/08<br>//(C08L15/00,23/08)(C08L23/08,15/00) |
| A | EP-A-0 357 322 (EXXON CHEMICAL PATENTS INC.)<br>* Anspruch 4 *<br>--- | 1 | |
| A | EP-A-0 202 782 (THE BRITISH PETROLEUM COMPANY)<br>* Anspruch 5 *<br><br>----- | 1 | |
| | | | **RECHERCHIERTE SACHGEBIETE (Int. Cl.5)**<br><br>C08L |

Der vorliegende Recherchenbericht wurde für alle Patentansprüche erstellt

| Recherchenort | Abschlußdatum der Recherche | Prüfer |
|---|---|---|
| DEN HAAG | 12 NOVEMBER 1992 | VAN HUMBEECK F. |